# EUROPÄISCHE PATENTSCHRIFT

(11) **EP 3 361 612 B1**
(45) Veröffentlichungstag und Bekanntmachung des Hinweises auf die Patenterteilung: **23.01.2019**
(21) Anmeldenummer: 18155294.4
(22) Anmeldetag: 06.02.2018
(51) Int. Cl.: H02K 41/03, F41B 6/00, H02K 41/00

(54) **ELEKTROMAGNETISCHER STOSSANTRIEB**
ELECTROMAGNETIC IMPACT DRIVE
ENTRAÎNEMENT PAR IMPACT ÉLECTROMAGNÉTIQUE

(30) Priorität: 13.02.2017 DE 102017102835
(43) Veröffentlichungstag der Anmeldung: 15.08.2018
(73) Patentinhaber: Benteler Maschinenbau GmbH, 33602 Bielefeld (DE)
(72) Erfinder: Frank, Anton, 33102 Paderborn (DE); Frost, Georg, 32839 Steinheim (DE); Rabe, Frank, 32120 Hiddenhausen (DE); Hesselmann, Martin, 34439 Willebadessen (DE)
(74) Vertreter: Griepenstroh, Jörg

(56) Entgegenhaltungen:
- JP-A- S5 985 329
- US-A- 4 594 521
- US-A1- 2003 137 377

## Beschreibung

Die Erfindung betrifft einen elektromagnetischen Stoßantrieb für ein linear zu bewegendes Werkzeug gemäß den Merkmalen des Patentanspruchs 1.

Für das nicht-thermische Stanzen, Lochen, Schneiden oder Fügen von Gegenständen aus einem Feststoff, der ein kristallines, teilkristallines oder ein amorphes Gefüge aufweist, mittels einem mit einer in Bezug auf die Wärmeausbreitungsgeschwindigkeit des Gegenstandes großen Flächendurchtrittsgeschwindigkeit geführten Umform-, Schneid-, Setz- oder Fügewerkzeug sind hydraulisch, pneumatisch, pyrotechnisch oder die Wirkung einer Brennkraft nutzenden Antriebe bekannt. Üblicherweise beschleunigen die zu dem Stoßen von Umform-, Schneid-, Setz- oder Fügewerkzeugen genutzten Antriebe eine Masse, beispielsweise einen als Hammer, Schlagbolzen oder als Treibkolben bezeichneten Prallkörper mit einer harten Schlagfläche, der den kinetischen Impuls durch den Prall auf den ebenfalls eine harte Oberfläche aufweisenden Körper des Werkzeugs oder des zu treibenden Gegenstandes überträgt.

Die in den bekannten Umform-, Schneid-, Setz- oder Fügewerkzeugen eingesetzten hydraulischen, pneumatischen, pyrotechnischen oder die Wirkung einer Brennkraft nutzenden Schlag-Antriebe erfordern das Zuführen von unter einem Betriebsdruck stehenden und gegebenenfalls brennbaren Flüssigkeiten oder Gasen oder eines in Behältern portionierten, explosionsfähigen Brennstoffs sowie das Ab- oder Rückführen der entspannten Fluide oder der Reaktionsprodukte bzw. Abgase. Des Weiteren sind die Steuerbarkeit, die Überwachbarkeit und der Wirkungsgrad der fluid- oder pyro-mechanischen Wandler und der Brennkraftmaschinen üblicherweise geringer als die eines elektromagnetischen Aktuators, der mit einem nur geringen Aufwand in eine Werkzeugmaschine eingesetzt werden kann. Gegenüber einem fluid- oder pyro-mechanischen Wandler oder einer Brennkraftmaschine sind bei einem elektromagnetischen Aktuator mechanischen, thermischen und chemischen Lasten geringer.

Die JP 59085329 offenbart einen elektromagnetisch angetriebenen Stoßantrieb.

Die US 4,594,521 offenbart einen pyrotechnisch angetriebenen Stoßantrieb.

In der US 2003/0137377 A1 wird eine sogenannte "rail gun" offenbart, die in der Lage ist, Projektile auf große Geschwindigkeiten zu beschleunigen.

Hiervon ausgehend liegt der Erfindung die Aufgabe zugrunde, für ein linear zu bewegendes Werkzeug einen elektromagnetischen Stoßantrieb aufzuzeigen, welcher möglichst kompaktbauend für den Einsatz in einer Werkzeugmaschine geeignet ist und eine große Leistungsfähigkeit und Leistungsdichte für einen sich periodisch wiederholenden Reversierbetrieb ermöglicht.

Diese Aufgabe ist bei einem elektromagnetischen Stoßantrieb mit den Merkmalen des Patentanspruchs 1 gelöst.

Der elektromagnetische Stoßantrieb ist für linear zu bewegende Werkzeuge vorgesehen und insbesondere anwendbar auf Werkzeuge zum Stanzen, Lochen, Schneiden und Fügen von Gegenständen. Der Stoßantrieb umfasst zwei elektrisch leitfähige, ineinander greifende Schraubenfedern, die jeweils mit ihren fest stehenden Enden an einem Widerlager abgestützt sind und die jeweils mit ihren beweglichen Enden an einem elektrisch leitfähigen Anker gefügt sind, der an einen linear beweglich gelagerten Stößel gebunden ist. Die beweglichen Enden der Schraubenfedern sind dabei über den Anker elektrisch leitend aneinander gebunden. Die fest stehenden Enden der Schraubenfedern sind ausgestattet mit elektrischen Anschlüssen für die Anbindung an eine schaltbare Elektrizitätsquelle zum Zwecke der Einleitung einer elektrischen Stromstärke. Die elektrische Stromstärke wird über den elektrischen Anschluss von der einen Schraubendruckfeder in einer ersten Richtung zum Anker und von dem Anker in entgegengesetzter zweiter Richtung über die zweite Schraubenfeder zurück zu dem anderen elektrischen Anschluss geführt, so dass die benachbarten Windungen der beiden Schraubendruckfedern bei geschlossenem elektrischen Kreis eine gegensinnig gerichtete Kraft erzeugen, welche die Schraubenfedern längt und deren bewegliche Enden mit dem Anker beschleunigt. Ferner ist eine Steuereinrichtung dazu ausgebildet, den elektrischen Kreis mit der Elektrizitätsquelle zu öffnen und zu schließen.

Der erfindungsgemäße Stoßantrieb überlagert zwei Wirkprinzipien: Einerseits wirkt die mechanische Kraft aus der Elektrizität der Schraubenfedern und andererseits sind zwei von einer elektrischen Stromstärke durchflossene Leiter in Form von zwei ineinander greifenden Schraubenfedern vorgesehen, welche an einem Ende durch eine Kurzschlussbrücke (Anker) elektrisch leitend aneinander gebunden sind. Diese als Anker bezeichnete Kurzschlussbrücke ist linear beweglich. Die gegensinnig von der elektrischen Stromstärke durchflossenen Windungen der Schraubenfedern stoßen sich aufgrund des durch die elektrische Stromstärke entstehenden Magnetfeldes gegenseitig ab. Dadurch wird der Abstand zwischen den benachbarten Windungen der Schraubenfedern größer und die beweglichen Enden mit dem Anker über einen begrenzten Stellweg beschleunigt. Für den gewünschten Anwendungsfall in einer Werkzeugmaschine reichen geringe Stellwege, insbesondere zum Stanzen von Blechen, vollkommen aus. Der erfindungsgemäße Stoßantrieb ist sehr kompakt bauend und insbesondere reversibel, indem der elektrische Kreis durch die Steuereinrichtung geöffnet und/oder umgeschaltet, so dass die elektrische Stromstärke von den elektrischen Anschlüssen an den festen Enden in einer gleichsinnigen Richtung über die Schraubenfedern zu einem dritten Anschluss an dem Anker geführt wird. Die von der elektrischen Stromstärke in gleicher Richtung durchflossenen Windungen der Schraubenfedern ziehen sich aufgrund der von der Stromstärke induzierten Magnetfelder gegenseitig an. Dadurch wird der Abstand zwischen den Windungen kleiner. Der Betrieb ist verschleißarm, gut elektrisch steuerbar und überwachbar. Es ist ein universeller Betrieb mit elektrischer Gleich- oder Wechselspannung möglich. Zudem besitzt der erfindungsgemäße Stoßantrieb gegenüber anderen elektromagnetischen Linearantrieben mit einem begrenzten Stellweg einen großen elektromechanischen Wirkungsgrad. Die Leistungsdichte ist ebenfalls groß und dadurch der Raumbedarf gering. Als weiterer Vorteil ist zu nennen, dass geringere mechanische, thermische und chemische Wechsel- und Spitzenlasten entstehen.

Es besteht die Möglichkeit, die Baugruppe, bestehend aus den Schraubenfedern und dem Anker zusammen mit den Kontaktstücken für die Elektrizitätszuführung, einteilig als Formguss-, Pulver-Sinter-, formloses (3D-) Laser-Sinter- oder als Schmelzauftragsstück als auch als ein durch die spanabtragende Formgebung erstelltes 3D-Frästeil zu gestalten. Als Werkstoff für diese Baugruppe eignen sich Metalle, die eine große elektrische Leitfähigkeit, eine große mechanische Zugfestigkeit und möglichst keine dauerhafte Magnetisierung aufweisen. Zu den bevorzugt geeigneten Werkstoffen gehören die Metalle Aluminium, Kupfer, Nickel oder Silber und deren Legierungen. Der Stößel besteht aus Gründen des Leichtbaus vorzugsweise aus mehreren Bauteilen bzw. aus unterschiedlichen Werkstoffen. Der Stößel kann gleichzeitig die Funktion der linearen Führung des elektromagnetischen Stoßantriebs übernehmen. Der Stößel besitzt vorzugsweise eine Kupplung zur Aufnahme eines Werkzeugs, beispielsweise eines Schneidstempels.

Der elektromagnetische Stoßantrieb kann prinzipiell anstelle von Schneidwerkzeugen auch für andere Bearbeitungsverfahren, wie zum Beispiel das Setzen von Bolzen, Nägeln oder Nieten genutzt werden. Er kann auch in Maschinen zum Einsatz kommen, die nicht oder nur mittelbar zur Produktion von Werkstücken genutzt werden, beispielsweise für Stoß-Impaktor-Teststände.

Besonders platzsparend kann der linear bewegliche Stößel innerhalb des von den Schraubenfedern begrenzten Innenraums eingesetzt sein. Die konzentrische Anordnung von Stößel und Schraubenfeder mindert das Entstehen von Biegemomenten im Unterschied zu exzentrischen Stößeln, die achsparallel zu dem Anker angeordnet sind. Der Stößel durchsetzt den Anker vorzugsweise zentrisch. Es kann sich auch um einen geteilten Stößel handeln, der funktionale Abschnitte beiderseits des Ankers besitzt. Der Stößel ist insbesondere so aufgebaut, dass er in Linearlagern geführt ist, von denen eines benachbart einem Anschlagpuffer angeordnet ist. Der Anker oder der Stößel berühren in einer ausgefahrenen Position den Anschlagpuffer. Das ist erforderlich, um den Stellweg zu begrenzen. Insbesondere bei Schraubenfedern, die auch ohne die Kraft der von der elektrischen Stromstärke bewirkten Magnetfelder gegen den Anschlagpuffer drücken, ist es allein aus Sicherheitsgründen zweckmäßig, einen stoßaufnehmenden End-Anschlag vorzusehen.

Die Schraubenfedern, die eine Schubkraft auf den Stößel ausüben, können vorgespannt sein. Über eine Rückstelleinrichtung kann der Stößel von der ausgefahrenen Position in eine Ausgangsposition überführt werden. Von der Ausgangsposition ausgehend wird der Stößel stark beschleunigt, wobei sich die Federkraft der vorgespannten Schraubenfedern und die zwischen benachbarten Windungen wirkenden elektromagnetischen Kräfte zu der resultierenden Stoßkraft überlagern. Die Rückstelleinrichtung kann in diesem Zusammenhang ein Linear-Antrieb sein, beispielsweise ein Pneumatikzylinder mit Rückzugskolben, der unmittelbar oder mittels einer Kupplung an den Stößel gebunden ist.

Es ist im Rahmen der Erfindung auch möglich, an dem Anker einen Anschluss zur gleichsinnigen Polung der Schraubenfedern anzuordnen, damit sich benachbarte Windungen zum Zurückstellen der Schraubenfeder und damit zum Zurückziehen des Stößels gegenseitig anziehen.

Für die Funktionsweise ist es wichtig, dass es nicht zu einem Kurzschluss zwischen den Windungen der Schraubenfedern kommt. Daher sind die Schraubenfedern im Bereich der Windungen elektrisch isoliert. Hierzu besitzt wenigstens eine der beiden Schraubenfedern einen elektrisch isolierenden Überzug. Vorzugsweise besitzen beide Schraubenfedern einen elektrisch isolierenden Überzug. Die einzige elektrisch leitende Bindung zwischen den Schraubenfedern ist der Anker.

Die Schraubenfedern und der Anker sind vorzugsweise in einer elektrisch isolierenden Einhausung aus Kunststoff angeordnet. Die Einhausung aus Kunststoff dient lediglich zur Isolation. Der Anschlagpuffer nimmt die vom Stößel ausgeübten Schubkräfte auf. Hierzu kann ein zusätzliches Gehäuse, das gleichzeitig als äußere Einhausung des Stoßantriebes dient, zwischen dem Widerlager und dem freien Ende des Stößels angeordnet sein.

Um Bauraum zu sparen, können die Schraubenfedern aus einem Flachdraht hergestellt sein, wobei sich die abgeflachten Seiten mit der größeren Kantenlänge zwischen den Windungen befinden. Hierdurch können die benachbarten Windungen planparallel zueinander gerichtet stehen. Es sind auch größere Windungszahlen und größere bauraumbezogene magnetische Flussdichten möglich als bei dem Einsatz von Schraubenfedern, deren Windungen einen dreieckigen oder einen kreisförmigen Querschnitt aufweisen oder bei denen sich die abgeflachten Seiten mit der kleineren Kantenlänge zwischen den Windungen befinden.

Der Stößel kann nach dem Zurückstellen mittels einer Rückstelleinrichtung oder durch Umpolung der Stromflussrichtung in einer der beiden Schraubenfedern in der Ausgangsposition von einer Rückhaltevorrichtung arretiert werden. Die Rückhaltevorrichtung besitzt entweder eine auslösbare Sperrklinke, die mit einem Sperrvorsprung des Stößels in Eingriff bringbar ist, oder eine Kupplung, die einen magnetischen, pneumatischen, hydraulischen oder mechanischen Kraftschluss zwischen dem Stößel und der äußeren Einhausung bewirken kann. Die Auslösung des Stoßantriebes kann durch Auslösen der Rückhaltevorrichtung erfolgen.

Die Erfindung wird nachfolgend anhand eines in schematischen Zeichnungen dargestellten Ausführungsbeispiels erläutert. Es zeigen:
- Figur 1: eine schematische Darstellung des Prinzips "Rail Gun";
- Figur 2: eine schematische Darstellung des Antriebsprinzips des erfindungsgemäßen elektromagnetischen Stoßantriebes und
- Figur 3: in stark vereinfachter Darstellung ein praktisches Ausführungsbeispiel des Stoßantriebes mit einem Schneidstempel.

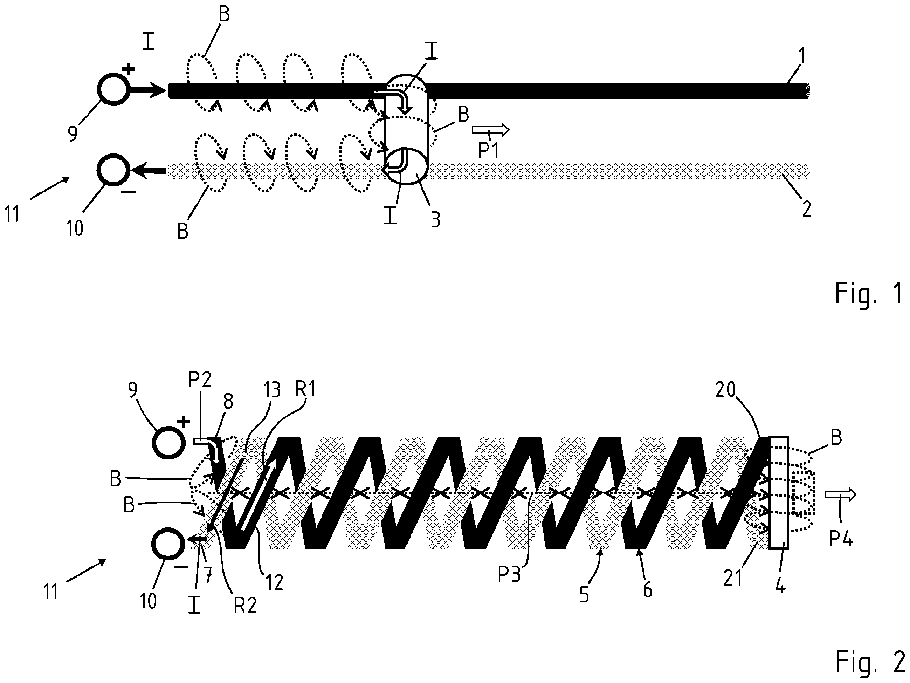

Figur 1 zeigt zwei parallele elektrisch leitfähige Schienen 1, 2, die an eine Elektrizitätsquelle 11 angeschlossen sind. Die beiden Schienen 1, 2 sind elektrisch leitend über einen Läufer 3 kurzgeschlossen. Der Läufer 3 ist gegenüber den Schienen 1, 2 in Richtung des Pfeils P1 beweglich gelagert. Wird eine elektrische Stromstärke I über die Schienen 1, 2 und den Läufer 3 geführt, werden die Schienen 1, 2 und der Läufer 3 von einer magnetischen Flussdichte B umgeben. Getrieben von der Lorentz-Kraft bewegt sich der Läufer 3 durch das senkrecht zu der Richtung der elektrischen Stromstärke stehende Magnetfeld in Richtung des Pfeils P1. Der Läufer 3 wird dabei stark beschleunigt. Das ist das Prinzip "Rail Gun".

Figur 2 zeigt im Unterschied zum Prinzip "Rail Gun" gemäß Figur 1, dass bei dem erfindungsgemäßen Stoßantrieb ein Anker 4 fest an zwei elektrisch leitfähige Schraubenfedern 5, 6 gebunden ist, wobei die Schraubenfedern 5, 6 ineinander greifen. Die Schraubenfedern 5, 6 besitzen die gleiche Länge und den gleichen Durchmesser und greifen über ihre gesamte Länge ineinander, wie es in Figur 2 prinzipiell dargestellt ist. Die feststehenden Enden 7, 8 der Schraubenfedern 5, 6 befinden sich in der Bildebene links. Sie sind mit elektrischen Anschlüssen an eine zuschaltbare Elektrizitätsquelle 11 gebunden. Dadurch wird eine elektrische Stromstärke I in Richtung des Pfeils P2 in eine der beiden Schraubenfedern 6 eingeleitet. Die elektrische Stromstärke I fließt über den Anker 4 in die zweite Schraubendruckfeder 5 und von dort über das feststehende Ende 7 zum anderen elektrischen Anschluss 10 der Elektrizitätsquelle 11. Durch die elektrische Stromstärke I bzw. die bewegte Ladung werden die Windungen 12, 13 von einer magnetischen Flussdichte B umgeben. Die magnetischen Felder folgen dem elektrischen Pfad und bilden sich daher schraubenlinienförmig aus, wie die Windungen 12, 13. Da die Windungen 12, 13 bzw. die Schraubenfedern 5, 6 gegensinnig in den Richtungen R1 und R2 von der Stromstärke I durchflossen werden, sind auch die induzierten Magnetfelder mit der magnetischen Flussdichte B gegensinnig gerichtet und stoßen sich ab. Dieser Effekt wird graphisch dargestellt durch die Pfeile P3, die als Resultierende auf der Mittellängsachse der Schraubenfedern 5, 6 eingetragen sind. Die Abstoßungskräfte addieren sich, so dass die Schraubenfedern 5, 6 unter dem Einfluss der Abstoßungskräfte elastisch umgeformt werden. Der Anker 4 wird von den beweglichen Enden 20, 21 der Schraubendruckfedern 5, 6 zusammen mit den beweglichen Enden 20, 21 in Richtung des Pfeils P4 in der Bildebene nach rechts bewegt. Der Anker 4 bleibt anders als beim Prinzip "Rail Gun" der Figur 1 an die Schraubenfedern 5, 6 gebunden. Wird die elektrische Stromstärke von der Elektrizitätsquelle 11 unterbrochen, bricht das magnetische Feld zusammen und die Schraubenfedern 5, 6 unterliegen nur noch der Stellkraft aus der elektrischen Auslenkung von der Ruhelage.

Bei den Schraubenfedern 5, 6 kann es sich insbesondere um abgeflachte Schraubendruckfedern handeln, die in einer nicht näher dargestellten Ausgangsposition vorgespannt sind, so dass sich bei Auslösung der Stoßeinrichtung die mechanische Federkraft der Schraubenfedern 5, 6 und die elektromagnetischen Kräfte bei einheitlicher Wirkrichtung überlagern, so dass der Anker 4 in kürzester Zeit sehr stark beschleunigt wird. Dadurch sind die Hubwege zur Beschleunigung des Stößels sehr klein. Die Anordnung ist dadurch sehr kompakt.

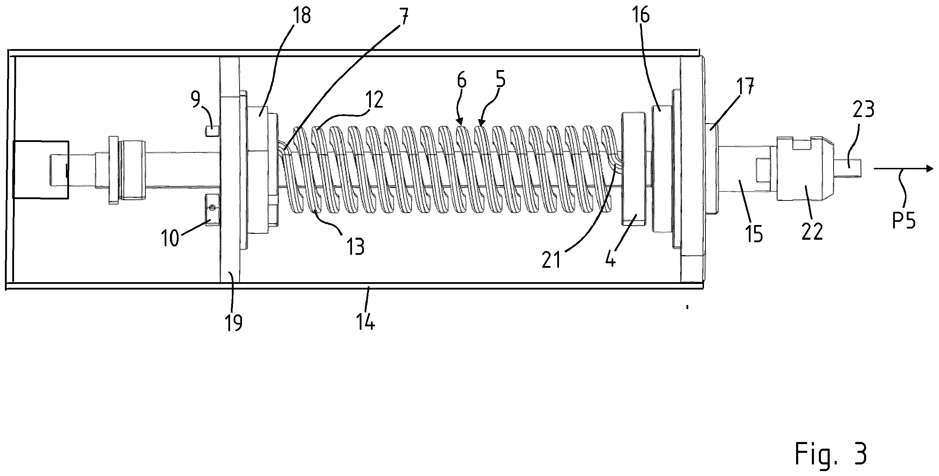

Ein konstruktives Ausführungsbeispiel ist in Figur 3 gezeigt.

Figur 3 zeigt in einem elektrisch isolierten Gehäuse 14 den Anker 4, welcher elektrisch leitend an zwei Schraubenfedern 5, 6 gebunden ist. Die elektrische Beschaltung dieser Schraubenfedern 5, 6 entspricht derjenigen in Figur 2. Die Schraubenfedern 5, 6 umgeben einen Stößel 15, der linear innerhalb des Gehäuses 14 beweglich gelagert ist. Der Anker 4 ist zur Kraftübertragung mit dem beweglichen Ende 21der Schraubenfeder 6, mit dem in der Figur 3 nicht sichtbaren beweglichen Ende 20 der Schraubenfeder 5, und mit dem Stößel 15 gekoppelt. Der Stößel 15 berührt in seiner ausgefahrenen Position einen Anschlagpuffer 16. Dem Anschlagpuffer 16 benachbart befindet sich auf der dem Anker 4 abgewandten Seite ein Linearlager 17, über welches der Stößel 15 gegenüber dem Gehäuse 14 gelagert ist. Ein zweites Linearlager 18 befindet sich benachbart dem feststehenden Ende 7 der dargestellten Schraubenfedern 5, 6. Dort ist das Linearlager 18 an einem Widerlager 19 gehalten, über welches die von dem Stoßantrieb ausgeübten Stoßkräfte in Richtung des Pfeils P5 aufgefangen und in das Gehäuse 14 eingeleitet werden. Auf der dem Widerlager 19 abgewandten Seite sind die elektrischen Anschlüsse 9, 10 angeordnet, über welche eine elektrische Stromstärke I mittels einer Steuereinrichtung eingespeist werden kann, um den elektrischen Kreis über die Schraubenfedern 5, 6 und den Anker 4 zu öffnen oder zu schließen. Am Ende des Stößels 15 ist eine Kupplung 22 für die Aufnahme eines Schneidstempels 23 angeordnet. Ein solcher Stoßantrieb eignet sich insbesondere für Verfahren zum adiabaten Schneiden.

### Bezugszeichen:

- 1 -: Schiene
- 2 -: Schiene
- 3 -: Läufer, zu 1 und 2 ("Kurzschlussläufer")
- 4 -: Anker, zu 5 und 6 ("Magnetanker")
- 5 -: Schraubenfeder
- 6 -: Schraubenfeder
- 7 -: feststehendes Ende v. 5
- 8 -: feststehendes Ende v. 6
- 9 -: elektrischer Anschluss
- 10 -: elektrischer Anschluss
- 11 -: Elektrizitätsquelle
- 12 -: Windung
- 13 -: Windung
- 14 -: Gehäuse
- 15 -: Stößel
- 16 -: Anschlagpuffer
- 17 -: Linearlager
- 18 -: Linearlager
- 19 -: Widerlager
- 20 -: bewegliches Ende v. 5
- 21 -: bewegliches Ende v. 6
- 22 -: Kupplung
- 23 -: Schneidstempel

- B -: magnetische Flussdichte
- I -: elektrische Stromstärke
- P1 -: Pfeil
- P2 -: Pfeil
- P3 -: Pfeil
- P4 -: Pfeil
- P5 -: Pfeil
- R1 -: Richtung von I
- R2 -: Richtung von I

## Patentansprüche

1. Elektromagnetischer Stoßantrieb für ein linear zu bewegendes Werkzeug mit folgenden Merkmalen:
a) Zwei elektrisch leitfähige und ineinander greifende Schraubenfedern (5, 6) sind mit ihren beiden feststehenden Enden (7, 8) an einem Widerlager (19) abgestützt und mit ihren beweglichen Enden (20, 21) an einen gemeinsamen, elektrisch leitfähigen Anker (4) gefügt, der an einen linear beweglichen Stößel (15) gebunden ist;
b) Die beweglichen Enden (21, 22) der Schraubenfedern (5, 6) sind über den Anker (4) elektrisch leitend aneinander gebunden;
c) Die feststehenden Enden (7, 8) der Schraubenfedern (5, 6) sind über die elektrischen Anschlüsse (9, 10) gebunden an eine schaltbare Elektrizitätsquelle (11) zum Zwecke der Einleitung einer elektrischen Stromstärke (I), die von dem einen elektrischen Anschluss über die Schraubenfeder (5, 6) in einer ersten Richtung (R1) zum Anker (4) und von dort in entgegengesetzter zweiter Richtung (R2) über die zweite Schraubenfeder (5, 6) zurück zu dem anderen elektrischen Anschluss (10) fließt, so dass benachbarte Windungen (12, 13) der beiden Schraubenfedern (5, 6) bei einem geschlossenen elektrischen Kreis ein gegensinnig gerichtetes Kräftepaar als Abstoßung erfahren;
d) Eine Steuereinrichtung ist dazu ausgebildet, den elektrischen Kreis mit der Elektrizitätsquelle (11) zu öffnen und zu schließen.

2. Stoßantrieb nach Anspruch 1, **dadurch gekennzeichnet, dass** der linear bewegliche Stößel (15) von den Schraubenfedern (5, 6) umgeben ist.

3. Stoßantrieb nach Anspruch 1 oder 2, **dadurch gekennzeichnet, dass** die Federkraft der zur Auslösung vorgespannten Schraubenfedern (5, 6) und die zwischen den Windungen (12, 13) der Schraubenfedern (5, 6) wirkenden elektromagnetischen Kräfte zu einer auf den Stößel (15) wirkenden Stoßkraft überlagerbar sind.

4. Stoßantrieb nach einem der Ansprüche 1 bis 3, **dadurch gekennzeichnet, dass** der Stößel (15) eine Kupplung (22) für die Aufnahme eines Werkzeugs aufweist.

5. Stoßantrieb nach einem der Ansprüche 1 bis 4, **gekennzeichnet durch** eine Rückstelleinrichtung, um den Stößel (15) von einer ausgefahrenen Position in eine Ausgangsposition zu überführen.

6. Stoßantrieb nach einem der Ansprüche 1 bis 4, **dadurch gekennzeichnet, dass** an dem Anker (4) ein Anschluss zur gleichsinnigen Polung der Schraubenfedern (5, 6) angeordnet ist, damit sich benachbarte Windungen (12, 13) der Schraubenfedern (5, 6) elektromagnetisch anziehen.

7. Stoßantrieb nach einem der Ansprüche 1 bis 6, **dadurch gekennzeichnet, dass** der Anker (4) oder der Stößel (15) in seiner Endlage einen Anschlagpuffer (16) berührt.

8. Stoßantrieb nach einem der Ansprüche 1 bis 7, **dadurch gekennzeichnet, dass** der Stößel (15) in Linearlagern (17, 18) geführt ist, von denen eines benachbart dem Anschlagpuffer (16) angeordnet ist.

9. Stoßantrieb nach einem der Ansprüche 1 bis 8, **dadurch gekennzeichnet, dass** wenigstens eine der beiden Schraubenfedern (5, 6) einen elektrisch isolierenden Überzug besitzt.

10. Stoßantrieb nach einem der Ansprüche 1 bis 9, **dadurch gekennzeichnet, dass** der Stößel (15) als Rohr ausgeführt ist.

11. Stoßantrieb nach einem der Ansprüche 1 bis 10, **dadurch gekennzeichnet, dass** die Schraubenfeder (5, 6) und der Anker (4) einteilig und stoffeinheitlich ausgebildet sind.

12. Stoßantrieb nach einem der Ansprüche 1 bis 11, **dadurch gekennzeichnet, dass** die Schraubenfeder (5, 6) und der Anker (4) aus wenigstens einem der Metalle Aluminium, Kupfer, Nickel, Silber oder aus wenigstens einer deren Legierungen besteht.

13. Stoßantrieb nach einem der Ansprüche 1 bis 11, **dadurch gekennzeichnet, dass** die Schraubenfeder (5, 6) und der Anker (4) aus Zinn-Bronze CuSn6 bestehen.

14. Stoßantrieb nach einem der Ansprüche 1 bis 13, **dadurch gekennzeichnet, dass** die Schraubenfedern (5, 6) und der Anker (4) in einer elektrisch isolierenden Einhausung aus Kunststoff angeordnet sind.

15. Stoßantrieb nach einem der Ansprüche 1 bis 14, **dadurch gekennzeichnet, dass** die Schraubenfeder (5, 6) aus Flachdraht hergestellt ist, wobei sich die abgeflachten Seiten zwischen den Windungen (12, 13) befinden.

16. Stoßantrieb nach einem der Ansprüche 1 bis 15, **dadurch gekennzeichnet, dass** der Stößel (15) von einer Rückhaltevorrichtung in einer eingefahrenen Position an dem Gehäuse (14) arretierbar ist.

17. Stoßantrieb nach Anspruch 15, **dadurch gekennzeichnet, dass** die Rückhaltevorrichtung eine auslösbare Sperrklinke umfasst.

18. Stoßantrieb nach Anspruch 16, **dadurch gekennzeichnet, dass** die Rückhaltevorrichtung eine Kupplung umfasst, die einen magnetischen, pneumatischen, hydraulischen oder mechanischen Kraftschluss zwischen dem Stößel (15) und dem Gehäuse (14) bewirkt.

## Claims

1. Electromagnetic impact drive for a tool to be moved in a linear manner with the following features:
a) Two electrically conductive and interlocking coil springs (5, 6) are supported with their two fixed ends (7, 8) on an abutment (19) and joined with their moving ends (20, 21) on a shared, electrically conductive armature (4) which is bonded on a linearly moveable tappet (15);
b) The moving ends (21, 22) of the coil springs (5, 6) are bonded to one another in an electrically conductive manner via the armature (4);
c) The fixed ends (7, 8) of the coil springs (5, 6) are bonded on a switchable electricity source (11) via the electrical connections (9, 10) for the purpose of initiating an electrical current (I) which flows from one electrical connection via the coil spring (5, 6) in a first direction (R1) to the armature (4) and from there flows back in the opposing second direction (R2) via the second coil spring (5, 6) to the other electrical connection (10) so that neighbouring windings (12, 13) of the two coil springs (5, 6) in a closed electrical circuit experience a force couple as a repulsion directed in opposite directions;
d) A control unit is thus formed to open and close the electrical circuit with the electricity source (11).

2. Impact drive according to Claim 1, **characterised in that** the linearly moveable tappet (15) is surrounded by the coil springs (5, 6).

3. Impact drive according to Claim 1 or 2, **characterised in that** the spring force of the pre-loaded coil springs (5, 6) to be resolved and the electromagnetic forces working between the windings (12, 13) of the coil springs (5, 6) can be overlaid to an impact force working on the tappet (15).

4. Impact drive according to any one of Claims 1 to 3, **characterised in that** the tappet (15) has a coupling (22) for receiving a tool.

5. Impact drive according to any one of Claims 1 to 4, **characterised by** a restoring installation in order to transfer the tappet (15) from an extended position to a starting position.

6. Impact drive according to any one of Claims 1 to 4, **characterised in that** a connection to the polarity in the same direction of the coil spring (5, 6) is arranged on the armature (4) so that adjacent windings (12, 13) of the coil spring (5, 6) electromagnetically attract.

7. Impact drive according to any one of Claims 1 to 6, **characterised in that** the armature (4) or the tappet (15) move a stop buffer (16) into its end position.

8. Impact drive according to any one of Claims 1 to 7, **characterised in that** the tappet (15) is guided in linear bearings (17, 18), one of which is arranged adjacent to the stop buffer (16).

9. Impact drive according to any one of Claims 1 to 8, **characterised in that** at least one of the two spring coils (5, 6) has an electrically insulating cover.

10. Impact drive according to any one of Claims 1 to 9, **characterised in that** the tappet (15) is formed as a pipe.

11. Impact drive according to any one of Claims 1 to 10, **characterised in that** the spring coils (5, 6) and the armature (4) are formed in one part and of the same material.

12. Impact drive according to any one of Claims 1 to 11, **characterised in that** the spring coil (5, 6) and the armature (4) are made from at least one of the metals aluminium, copper, silver or from at least one of their alloys.

13. Impact drive according to any one of Claims 1 to 11, **characterised in that** the spring coil (5, 6) and the armature (4) are made from tin bronze CuSn6.

14. Impact drive according to any one of Claims 1 to 13, **characterised in that** the spring coil (5, 6) and the armature (4) are arranged in an electrically insulating housing made from plastic.

15. Impact drive according to any one of Claims 1 to 14, **characterised in that** the spring coil (5, 6) is produced from flat wire, wherein the flattened side is between the windings (12, 13).

16. Impact drive according to any one of Claims 1 to 15, **characterised in that** the tappet (15) can be locked by a restoring device in an extended position on the housing (14).

17. Impact drive according to any one of Claim 15, **characterised in that** the restoring device has a releasable safety catch.

18. Impact drive according to Claim 16, **characterised in that** the restoring device has a coupling which causes a magnetic, pneumatic, hydraulic or mechanical traction closing between the tappet (15) and the housing (14).

## Revendications

1. Entraînement par impact électromagnétique pour un outil à déplacer de manière linéaire avec les caractéristiques suivantes :
a) deux ressorts hélicoïdaux (5, 6) électriquement conducteurs et en prise l'un avec l'autre sont supportés avec leurs deux extrémités fixes (7, 8) au niveau d'une butée (19) et fixés avec leurs extrémités mobiles (20, 21) à un ancrage (4) électriquement conducteur commun qui est lié à un poussoir (15) mobile de manière linéaire ;
b) les extrémités mobiles (21, 22) des ressorts hélicoïdaux (5, 6) sont liées de manière électriquement conductrice l'une à l'autre par l'intermédiaire de l'ancrage (4) ;
c) les extrémités fixes (7, 8) des ressorts hélicoïdaux (5, 6) sont liées par l'intermédiaire des raccords électriques (9,10) à une source d'électricité (11) commutable afin d'initier une intensité de courant électrique (I) qui s'écoule de l'un raccord électrique en passant par le ressort hélicoïdal (5, 6) dans une première direction (R1) à l'ancrage (4) et de là revient dans une seconde direction opposée (R2) en passant par le second ressort hélicoïdal (5, 6) à l'autre raccord électrique (10), de sorte que des spires (12, 13) adjacentes des deux ressorts hélicoïdaux (5, 6) connaissent, dans un circuit électrique fermé, une paire de forces de sens contraire en tant que répulsion ;
d) un système de commande est réalisé pour ouvrir et pour fermer le circuit électrique avec la source d'électricité (11).

2. Entraînement par impact selon la revendication 1, **caractérisé en ce que** le poussoir (15) mobile de manière linéaire est entouré par les ressorts hélicoïdaux (5, 6).

3. Entraînement par impact selon la revendication 1 ou 2, **caractérisé en ce que** la force de ressort des ressorts hélicoïdaux (5, 6) précontraints pour le déclenchement et les forces électromagnétiques agissant entre les spires (12, 13) des ressorts hélicoïdaux (5, 6) peuvent se superposer en une force d'impact agissant sur le poussoir (15).

4. Entraînement par impact selon l'une quelconque des revendications 1 à 3, **caractérisé en ce que** le poussoir (15) présente un couplage (22) pour la réception d'un outil.

5. Entraînement par impact selon l'une quelconque des revendications 1 à 4, **caractérisé par** un système de rappel pour transférer le poussoir (15) d'une position sortie à une position de départ.

6. Entraînement par impact selon l'une quelconque des revendications 1 à 4, **caractérisé en ce qu'**un raccord pour la polarisation de même sens des ressorts hélicoïdaux (5, 6) est disposé au niveau de l'ancrage (4) afin que des spires (12, 13) adjacentes des ressorts hélicoïdaux (5, 6) s'attirent de manière électromagnétique.

7. Entraînement par impact selon l'une quelconque des revendications 1 à 6, **caractérisé en ce que** l'ancrage (4) ou le poussoir (15) est en contact, dans sa position finale, avec un tampon de butée (16).

8. Entraînement par impact selon l'une quelconque des revendications 1 à 7, **caractérisé en ce que** le poussoir (15) est conduit dans des paliers linéaires (17, 18) dont l'un est disposé de manière adjacente au tampon de butée (16).

9. Entraînement par impact selon l'une quelconque des revendications 1 à 8, **caractérisé en ce qu'**au moins l'un des deux ressorts hélicoïdaux (5, 6) possède un revêtement électriquement isolant.

10. Entraînement par impact selon l'une quelconque des revendications 1 à 9, **caractérisé en ce que** le poussoir (15) est conçu comme un tube.

11. Entraînement par impact selon l'une quelconque des revendications 1 à 10, **caractérisé en ce que** le ressort hélicoïdal (5, 6) et l'ancrage (4) sont réalisés d'un seul tenant et en un seul matériau.

12. Entraînement par impact selon l'une quelconque des revendications 1 à 11, **caractérisé en ce que** le ressort hélicoïdal (5, 6) et l'ancrage (4) sont constitués d'au moins l'un des métaux aluminium, cuivre, nickel, argent ou d'au moins un de leurs alliages.

13. Entraînement par impact selon l'une quelconque des revendications 1 à 11, **caractérisé en ce que** le ressort hélicoïdal (5, 6) et l'ancrage (4) sont constitués d'étainbronze CuSn6.

14. Entraînement par impact selon l'une quelconque des revendications 1 à 13, **caractérisé en ce que** les ressorts hélicoïdaux (5, 6) et l'ancrage (4) sont disposés dans un logement électriquement isolant en matière plastique.

15. Entraînement par impact selon l'une quelconque des revendications 1 à 14, **caractérisé en ce que** le ressort hélicoïdal (5, 6) est fabriqué à partir d'un fil plat, dans lequel les côtés aplatis se trouvent entre les spires (12, 13).

16. Entraînement par impact selon l'une quelconque des revendications 1 à 15, **caractérisé en ce que** le poussoir (15) peut être arrêté par un dispositif de retenue dans une position rentrée au niveau du boîtier (14).

17. Entraînement par impact selon la revendication 15, **caractérisé en ce que** le dispositif de retenue comprend un cliquet pouvant être libéré.

18. Entraînement par impact selon la revendication 16, **caractérisé en ce que** le dispositif de retenue comprend un couplage qui provoque un assemblage à force magnétique, pneumatique, hydraulique ou mécanique entre le poussoir (15) et le boîtier (14).
